# EUROPÄISCHE PATENTANMELDUNG

(11) **EP 1 840 441 A2**
(43) Veröffentlichungstag der Anmeldung: **03.10.2007**
(21) Anmeldenummer: 07004407.8
(22) Anmeldetag: 03.03.2007
(51) Int. Cl.: F16L 33/22

(54) **Schlauchanschlusselement**

(30) Priorität: 30.03.2006 DE 102006015998
(71) Anmelder: Hansgrohe AG, 77761 Schiltach (DE)
(72) Erfinder: Akaltan, Zafer, 77761 Schiltach (DE)
(74) Vertreter: Ruff, Michael

(57) **Zusammenfassung**

Es wird ein Schlauchanschlusselement vorgeschlagen, das sich an dem freien Ende eines Brauseschlauchs befestigen lässt. Das Schlauchanschlusselement enthält eine mit einem Flansch versehene Innenhülse (2), die in das Innere das Schlauchendes eingeschoben wird, bis dieser an dem Flansch anliegt. Auf die Außenseite des Schlauchendes ist ein Außenkorb (8) aufgebracht, der mit einer Überwurfmutter (13) zusammenwirkt. Die Überwurfmutter (13) bewirkt einerseits eine Verklemmung des Schlauchs (1) zwischen Innenhülse (2) und Außenkorb (8) und andererseits eine Möglichkeit, dieses Schlauchanschlusselement an einer Anschlussstelle anzuschrauben und auch wieder abzuschrauben.

## Beschreibung

Die Erfindung betrifft ein Schlauchanschlusselement.

Brauseschläuche zum Anschließen von Handbrausen an Armaturen werden in der Regel vorkonfektioniert geliefert, haben also eine bestimmte Länge. An beiden Enden ist ein Schlauchanschlusselement befestigt, das üblicherweise nicht abnehmbar ist. Aus diesem Grunde sind die Anschlussschläuche auf eine angenommene maximale Länge abgestimmt, die daher häufig nicht stimmt.

Es ist bereits eine Brauseschlauchgarnitur bekannt (DE 10 2004 028 457) bei der das Schlauchende zwischen einer Überwurfmutter und einer auf die Überwurfmutter aufschraubbaren Schraubhülse verklemmt wird.

Der Erfindung liegt die Aufgabe zu Grunde, ein Schlauchanschlusselement zu schaffen, mit dessen Hilfe ein Brauseschlauch auf einer Seite noch nachträglich abgelängt werden kann.

Zur Lösung dieser Aufgabe schlägt die Erfindung ein Schlauchanschlusselement mit den im Anspruch eins genannten Merkmalen vor. Weiterbildungen der Erfindung sind Gegenstand von Unteransprüchen.

Das Schlauchanschlusselement enthält also eine Innenhülse, die in das Ende des anzuschließenden Schlauchs eingeschoben wird. Dieser liegt dann mit Spannung an der Außenseite der Innenhülse an. Damit eine korrekte Position gegeben ist, enthält das Schlauchanschlusselement eine Anlagefläche für das Stirnende des Schlauchs. Ein Außenkorb ist vorgesehen, um an dem Schlauchende von der Außenseite her anzugreifen, so dass das Schlauchende zwischen der Innenhülse und dem Außenkorb festlegbar ist. Es ist eine Überwurfmutter vorgesehen, die das Schlauchanschlusselement und damit das Schlauchende an einer Anschlussstelle fest schrauben kann. Das Schlauchanschlusselement weist eine Gegenfläche für die Anlagefläche der Überwurfmutter auf.

Dieses von der Erfindung vorgeschlagene Schlauchanschlusselement kann also an einem Schlauchende nachträglich angebracht werden, so dass ein Installateur oder ein Endbenutzer einen vorhandenen Brauseschlauch auf der einen Seite verkürzen kann.

In Weiterbildung der Erfindung kann vorgesehen sein, dass die Anlagegegenfläche für die Überwurfmutter an dem Außenkorb ausgebildet ist.

Insbesondere kann in Weiterbildung der Erfindung vorgesehen sein, dass die an dem Außenkorb vorgesehene Anlagegegenfläche eine Schrägfläche ist, um einen längeren Schraubweg der Überwurfmutter zur Festlegung zu ermöglichen.

In nochmaliger Weiterbildung der Erfindung kann vorgesehen sein, dass der Außenkorb verformbar ausgebildet ist. Es wird dadurch möglich, die Verklemmung des Schlauchendes zwischen dem Außenkorb und der Innenhülse zu vergrößern, beispielsweise auch dadurch, dass die Überwurfmutter an der Anschlussstelle festgeschraubt wird. Zur Verformung des Außenkorbes kann dieser zusätzliche schräg verlaufende Angriffsflächen aufweisen.

Insbesondere kann erfindungsgemäß vorgesehen sein, dass der Au-βenkorb durch Schlitze unterbrochene in Axialrichtung verlaufende Zungen aufweist, deren Enden zum Eindrücken in den Schlauch ausgebildet sind, also etwa hakenförmig. Diese Haken und die Zungen, an denen sie angeformt sind, haben den doppelten Zweck, dass sie zum einen eine Verklemmung des Brauseschlauchendes zwischen der Innenhülse und dem Außenkorb verbessern und zum anderen ein Abziehen des Schlauchs aus dem Anschlusselement verhindern.

Es wurde bereits erwähnt, dass das Schlauchanschlusselement eine Anlagefläche aufweist, an der das Stirnende des Schlauchs zur exakten Positionierung anliegen kann. Erfindungsgemäß kann nun vorgesehen sein, dass diese Anlagefläche an einem Flansch der Innenhülse und/oder des Außenkorbs ausgebildet ist. Dieser Flansch verläuft vorzugsweise senkrecht zur Längsachse des Schlauchs beziehungsweise des Schlauchanschlusselements. Die dem Stirnende des Schlauchs abgewandte Seite kann dabei eine Anlagefläche für eine Dichtung bilden, die zum Abdichten des Schlauchanschlusses gegenüber der Anschlussstelle erforderlich ist.

Erfindungsgemäß kann in Weiterbildung vorgesehen sein, dass die Innenhülse und der Außenkorb ein einziges Bauteil bilden, das vorzugsweise auch einstückig ist.

Es ist aber ebenfalls möglich und liegt im Rahmen der Erfindung, dass die Innenhülse und der Außenkorb getrennte Elemente sind. In diesem Fall ist es möglich, beide Teile aus unterschiedlichen Materialien herzustellen. Beispielsweise ist es sinnvoll, die Innenhülse aus Metall herzustellen, den Außenkorb aber aus Kunststoff.

Zur Verbesserung der Verbindung zwischen dem Schlauchende und der Innenhülse kann vorgesehen sein, dass diese an ihrer Außenseite eine Rillenkontur aufweist, also mit umlaufenden nicht unterbrochenen Rippen. Diese können insbesondere ein Sägezahnprofil aufweisen, das so orientiert ist, dass das Einschieben der Innenhülse in den Schlauch beziehungsweise das Aufschieben des Schlauchs auf die Innenhülse erleichtert wird, während die umgekehrte Bewegung verhindert wird.

Bei einer zweiteiligen Ausbildung kann insbesondere vorgesehen sein, dass der die Anlagefläche für das Stirnende des Schlauchs bildende Flansch an der Innenhülse ausgebildet ist und über die Dicke des anzuschließenden Schlauchs radial weiter vorspringt, so dass er dort gleichzeitig eine Anlagefläche für den Außenkorb bildet.

Der Außenkorb, der die Anlagegegenfläche für die Überwurfmutter aufweist, kann zusätzlich eine umgekehrt orientierte Anlagefläche aufweisen, die ein Zurückschieben der Überwurfmutter verhindert, wenn der Schlauchanschluss einmal zusammengesetzt ist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen Axialschnitt durch ein mit einem Schlauchanschlusselement versehenes Schlauchende;
- Figur 2: in vergrößertem Maßstab eine perspektivische Ansicht eines Außenkorbs, wie er bei der Anordnung der Figur 1 Verwendung findet.

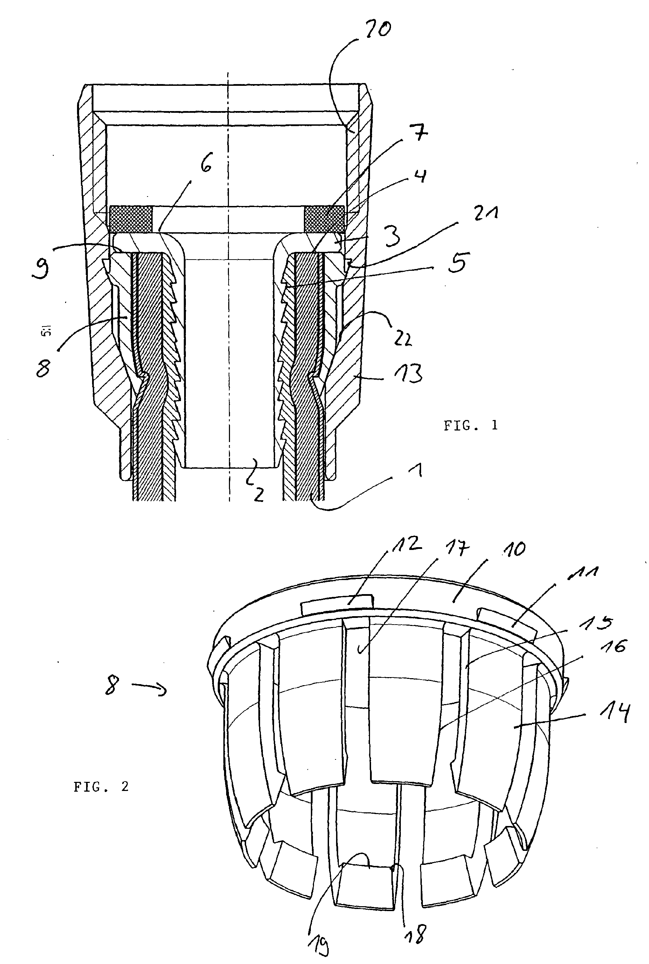

Das in Figur 1 dargestellte Anschlusselement dient dazu, einen Brauseschlauch 1, dessen Ende an einer beliebigen Stelle abgeschnitten ist, so auszustatten, dass er beispielsweise an einer Armatur, einem Wandanschlussbogen oder dergleichen angeschraubt werden kann. Das Schlauchanschlusselement enthält eine Innenhülse 2, die beispielsweise aus Metall besteht. Ihre Länge beträgt etwa das zwei bis dreifache ihres Innendurchmessers. An ihrem in Figur 1 oberen Ende, das heißt dem von dem Schlauch 1 abgewandten Ende, enthält die Innenhülse 2 einem nach außen gerichteten Flansch 3. Der Außendurchmesser des Flanschs 3 ist so bemessen, dass der Außenrand über die Außenseite des anzuschließenden Brauseschlauchs 1 deutlich vorspringt. Die Unterseite des Flanschs 3, also die der eigentlichen Hülse 2 zugewandte Seiten des Flanschs 3, bildet eine in einer Ebene senkrecht zur Längsachse der Hülse 2 liegende Anlagefläche, an der die Stirnseite 4 des Brauseschlauchs 1 zur Anlage kommen kann. Dadurch ist sichergestellt, dass die Innenhülse 2 vollständig in den Brauseschlauch 1 eingeschoben wird. Die Außenseite des Hülsenteils der Innenhülse 2 ist mit einer umlaufenden Verrippung versehen, wobei die umlaufenden Rippen 5 eine Sägezahnkonfiguration aufweisen. Die Sägezähne sind so orientiert, dass das Aufschieben des Brauseschlauchs 1 auf die Innenhülse 2 nicht behindert wird, während die umgekehrte Bewegung behindert wird.

Die der Anlagefläche für die Stirnseite 4 des Brauseschlauchs gegenüberliegende Fläche 6 des Flanschs 3 bildet eine in einer Ebene liegende Anlagefläche für einen Dichtring 7, der zum Abdichten des Brauseschlauchanschlusses gegenüber der Armatur dient.

An der Außenseite des Brauseschlauchendes ist ein Außenkorb 8 angeordnet, der mit seiner einen Stirnseite 9 ebenfalls an der Unterseite des Flanschs 3 der Innenhülse 2 anliegt. Die Form des Außenkorbs 8 geht aus Figur 2 hervor, die eine perspektivische Darstellung des Außenkorbs 8 in vergrößertem Maßstab darstellt.

Der Außenkorb hat im Bereich seines einen Endes einen massiven Ringkörper 10, dessen Oberseite an der Unterseite des Flanschs 3 zur Anlage kommt. An der Außenseite des Ringkörpers 10 sind über den Umfang verteilte keilartige Vorsprünge 11 ausgebildet, deren der freien Stirnseite zugewandten Begrenzungsflächen in einer Ebene senkrecht zur Achse liegen. Die in Figur 2 zu sehenden Unterseiten 12 verlaufen schräg zur Längsachse und bilden eine Anlagefläche für die später noch zu behandelnde Überwurfmutter 13. In Figur 1 ist zu sehen, das diese Anlageflächen 12 an der Überwurfmutter 13 anliegen.

An den massiven Ringkörper 10 schließen sich 10 federnde Zungen 14 an, die parallele Seitenkanten 15, 16 aufweisen. Die federnden Zungen 14 sind durch schmale Schlitze 17 voneinander getrennt. Die Breite der Schlitze 17 ist kleiner als die in Umfangsrichtung gemessenen Breite der Zungen 14. Dadurch, dass die Zungen 14 an ihrem einen Ende an dem Ringkörper 10 angeformt sind, lassen sie sich nach innen und außen biegen. Im Bereich ihrer jeweiligen freien Enden, also abgewandt von dem Ringkörper 10, weisen sie auf ihren Innenseiten hakenartige spitze Vorsprünge 18 auf, die eine in Umfangsrichtung verlaufende Kante 19 bilden. Alle Zungen 14 sind identisch ausgebildet. Die Breite aller Schlitze 17 ist gleich.

Zu dem Schlauchanschlusselement gehört, wie bereits erwähnt, auch eine Überwurfmutter 13. Die Überwurfmutter 13 weist an ihrem einen freien Ende, in Figur 1 oben, ein Innengewinde 20 auf, mit dem sie an einer Anschlussstelle angeschraubt werden kann. An den Bereich mit dem Innengewinde 20 schließt sich an der Innenseite der Überwurfmutter 13 ein Bereich mit einem konstanten Durchmesser an, der etwas größer ist als der Außendurchmesser der Dichtung 7 und des Flanschs 3.

An diesen Bereich schließt sich eine umlaufende Kerbe 21 an, deren eine Begrenzungsfläche in einer Ebene senkrecht zur Längsachse liegt. Die andere Begrenzungsfläche der Kerbe 21 liegt auf einem Kegelmantel, dessen Spitze von dem freien Ende der Überwurfmutter 13 weg gerichtet ist. Diese Fläche bildet die Anlagefläche für die bereits erwähnten Anlageflächen 12 der Vorsprünge 11 an der Außenseite des Ringkörpers 10 des Außenkorbs 8.

Beim weiter fortschreitender Beschreibung der Innenseite der Überwurfmutter 13 kommt dann im Anschluss an die Kerbe 21 ein Bereich mit konstanten Durchmesser, worauf dann sich der Innendurchmesser der Überwurfmutter 13 in einer Kegelfläche 22 stetig verringert. Die axiale Position dieser Kegelfläche 22 entspricht der axialen Position der Enden der Zungen 14 des axial ausgerichteten Außenkorbs 8. Bei dem Aufschrauben der Überwurfmutter 13 drückt daher diese Fläche 22 die Zungen 14 nach innen, so dass sich die spitzen Vorsprünge 18 in die Außenseite des Brauseschlauchs 1 eingraben und gleichzeitig eine Verklemmung des Brauseschlauchs 1 gegenüber der Innenhülse 2 verstärken.

Das in Figur 1 dargestellte Schlauchanschlusselement wird folgendermaßen mit dem Ende des Brauseschlauchs 1 verbunden.

Auf das Ende des in der richtigen Länge abgeschnittenen Brauseschlauchs wird zunächst die Überwurfmutter 13 mit ihrem engen Ende voraus aufgeschoben. Anschließend wird der Außenkorb 8 in der richtigen Orientierung, das heißt mit dem Zungen 14 voraus, auf den Brauseschlauch aufgeschoben. Hierbei können die Zungen 14 nach außen federn, so dass sie das Aufschieben nicht behindern. Anschließend wird entweder die Innenhülse 2 in das Innere des Brauseschlauchs ein- oder der Brauseschlauch auf die Innenhülse 2 aufgeschoben, bis sein Stirnende 4 an der Innenseite des Flanschs 3 anliegt. Falls der Außenkorb 8 zu weit aufgeschoben wurde, wird er zurückgeschoben, bis seine Stirnfläche 9 ebenfalls an der Unterseite des Flanschs 3 der Innenhülse 2 anliegt. Jetzt wird die Überwurfmutter 13 in Richtung auf das freie Ende des Schlauchs 1 zurückgeschoben, bis die Vorsprünge 11 an dem Ringkörper 10 des Außenkorbs in die umlaufende Kerbe 21 eingreifen. Damit ist das Schlauchanschlusselement mit dem Schlauch 1 verbunden. Die Überwurfmutter 13 kann weiterhin verdreht werden, da die Klemmung des Schlauchs 1 zwischen Innenhülse 2 und Außenkorb 8 noch keine ausreichend große Gegenkraft bewirkt, die ein Verdrehen der Überwurfmutter gegenüber dem Außenkorb verhindern würde. Durch Gestaltung des Schrägwinkels der Fläche 22 und durch die axiale Ausrichtung lässt sich bestimmen, bei welcher Positionen die Gegenkraft so kräftig wird, dass sich der Schlauch beim Verdrehen der Überwurfmutter 13 mit dreht. Beim Aufschrauben dreht er sich also zunächst noch nicht mit, erst bei der letzten viertel oder halben Umdrehung der Überwurfmutter kann sich der Schlauch 1 mitdrehen.

## Patentansprüche

1. Schlauchanschlusselement für einen Brauseschlauch, mit
1.1 einer Innenhülse (2) zum Einsetzen in das Ende des anzuschließenden Brauseschlauchs (1),
1.2 einer Anlagefläche für das Stirnende (4) des Schlauchs (1),
1.3 einem Außenkorb (8) zum Außenangriff an dem Schlauchende,
1.4 einer Überwurfmutter (13) zum Anschrauben des Anschlusselements an einer Anschlussstelle, sowie mit
1.5 einer Anlagegegenfläche (12) für die Überwurfmutter (13).

2. Anschlusselement nach Anspruch 1, bei dem die Anlagefläche (12) für die Überwurfmutter (13) an dem Außenkorb (8) ausgebildet ist.

3. Anschlusselements nach Anspruch 1 oder 2, bei dem die Anlagefläche (12) für die Überwurfmutter (13) eine Schrägfläche ist.

4. Anschlusselement nach einem der vorhergehenden Ansprüche, bei dem der Außenkorb (8) mindestens teilweise verformbar ausgebildet ist.

5. Anschlusselement nach einem der vorhergehenden Ansprüche, bei dem der Außenkorb (8) durch Schlitze (17) unterbrochene Zungen (14) aufweist, an deren freien Enden Haken ausgebildet sind.

6. Anschlusselement nach einem der vorhergehenden Ansprüche, bei dem die Anlagefläche für das Stirnende (4) des Schlauchs (1) an einem Flansch (3) der Innenhülse (2) und/oder des Außenkorbs (8) ausgebildet ist.

7. Anschlusselement nach einem der vorhergehenden Ansprüche, bei dem die Innenhülse (2) und der Außenkorb (8) ein vorzugsweise einstückiges Bauteil bilden.

8. Anschlusselement nach einem der Ansprüche 1 bis 6, bei dem die Innenhülse (2) und der Außenkorb (8) getrennte Elemente sind.

9. Anschlusselement nach einem der Ansprüche 6 bis 8, bei dem der Flansch (3) der Innenhülse (2) derart dimensioniert ist, dass er über die Außenseite des Schlauchs (1) vorspringt und eine Anlagefläche für den Außenkorb (8) bildet.

10. Anschlusselement nach einem der vorhergehenden Ansprüche, bei dem die Innenhülse (2) an ihrer Außenseite eine Rippenkontur vorzugsweise mit Sägezahnprofil aufweist.

11. Anschlusselement nach einem der vorhergehenden Ansprüche, bei dem der Außenkorb (8) eine das Zurückschieben der Überwurfmutter (13) hindernde Gegenfläche aufweist.

12. Verwendung eines Anschlusselements nach einem der vorhergehenden Ansprüche zum Anschließen eines Brauseschlauchs an einer Anschlussstelle.

13. Mit einem Anschlusselement nach einem der Ansprüche 1 bis 11 versehener Brauseschlauch.
